(19) Europäisches Patentamt / European Patent Office / Office européen des brevets

(11) **EP 4 603 626 A1**

(12) **EUROPEAN PATENT APPLICATION**
published in accordance with Art. 153(4) EPC

(43) Date of publication:
   **20.08.2025 Bulletin 2025/34**

(21) Application number: **23877302.2**

(22) Date of filing: **11.10.2023**

(51) International Patent Classification (IPC):
   **D01F 2/04** $^{(2006.01)}$

(52) Cooperative Patent Classification (CPC):
   **D01F 2/04**

(86) International application number:
   **PCT/JP2023/036859**

(87) International publication number:
   **WO 2024/080299 (18.04.2024 Gazette 2024/16)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **14.10.2022 JP 2022165457**

(71) Applicant: **Asahi Kasei Kabushiki Kaisha
   Tokyo 1000006 (JP)**

(72) Inventors:
   • **KAKIHARA, Yusuke
     Tokyo 100-0006 (JP)**

   • **UEHARA, Sadafumi
     Tokyo 100-0006 (JP)**
   • **TANAKA, Masanobu
     Tokyo 100-0006 (JP)**
   • **ONO, Takahiro
     Tokyo 100-0006 (JP)**
   • **SHIOMI, Yoshiyuki
     Tokyo 100-0006 (JP)**

(74) Representative: **dompatent von Kreisler Selting
   Werner -
   Partnerschaft von Patent- und Rechtsanwälten
   mbB
   Deichmannhaus am Dom
   Bahnhofsvorplatz 1
   50667 Köln (DE)**

(54) **CELLULOSE FIBERS, AND PRODUCTS USING SAID CELLULOSE FIBERS**

(57)    Provided are cellulose microfibers (fibrous cellulose) that can be used in a general-purpose manner for a variety of applications and that have a uniform fiber diameter distribution and a low proportion of both cellulose nanofibers and coarse structures, a composition containing said cellulose fibers, and a porous body composed of said cellulose fibers. The present invention relates to cellulose fibers in which the average fiber diameter in a dry state is 0.3-3.0 um as observed using an electron microscope, the proportion of fibers having a fiber diameter of less than 0.1 um is 5% or less, and the proportion of coarse structures as indicated by the proportion of fibers having a wet fiber diameter of 20 um or greater measured through automatic optical analysis is 3.0% or less. The present invention also relates to a composition containing said cellulose fibers, and a porous body composed of said cellulose fibers.

Fig. 1

**Description**

FIELD

The present invention relates to cellulose fibers and products using the cellulose fibers.

BACKGROUND

Cellulose is the most abundant carbohydrate on earth, and is a naturally occurring, biodegradable resource which is used in a variety of industrial fields. Further, with the establishment of the Sustainable Development Goals (SDGs) in recent years, it is expected to be a sustainable resource with low environmental impact.

As one cellulose utilization method, cellulose nanofibers, which are made by micronizing cellulose, are attracting attention. These nanofibers can be used in a variety of applications, including fillers for resins and rubbers, base materials for transparent materials and optical materials of electronic products and others, filters, additives for foods, paints, and cosmetics, base materials for packaging materials and gas barrier materials, as well as viscosity adjusters and dispersion stabilizers for various liquid products, and those which meet the required performance are being studied. By combining the selection of the type of cellulose used as the raw material, the selection of physical micronizing conditions, and the selection of chemical processing conditions, nanofibers of cellulose materials with various shapes and characteristics can be obtained.

Cellulose nanofibers have a strong agglomeration action due to intermolecular forces, and are prone to the generation of agglomerates due to agglomeration during storage, the generation of agglomerates due to strong hydrogen bonds during drying, and the generation of agglomerates due to entanglement of the fibers during stirring, kneading, etc. Further, when handled as a slurry, the viscosity may become excessively high, leading to handling difficulties and other problems. Furthermore, powerful mechanical treatment or treatment with chemicals is necessary for micronization, which increases costs. For these reasons, in applications where nanofibers are not required, they may be used in the form of microfibers, which are obtained by a weakened force of micronization.

However, if the force of micronization is weakened, not all of the original cellulose raw material is micronized, whereby unpulverized parts remain. If the force of micronization is increased to reduce the unpulverized parts, some of the material is converted into nanofibers, resulting in the formation of agglomerates.

Such agglomerates resulting from the agglomeration of nanofibers and undisintegrated parts which could not be micronized are coarse structures, which are significantly different from fiber structures having a certain range of L/D, and in accordance with the application, may impair the inherent performance of the microfibers.

For example, in the following Patent Literature 1, cellulose nanofibers are oxidized and then mixed with rubber latex to obtain a filler-rubber composite. Though a reduction in the amount of coarse structures in the rubber obtained is attempted by increasing the viscosity of the latex, as described in the Examples, a considerable amount of coarse structures of 10 $\mu$m or greater are contained in the rubber master batch in a dry state. This is presumably due to the generation of agglomerates resulting from the agglomeration and entanglement of nanofibers.

In the following Patent Literature 2, cellulose microfibers are obtained by wet pulverizing using a cellulose raw material having a low hemicellulose content. The fiber diameter is adjusted by changing the conditions of wet pulverizing. However, micronization by pulverizing inevitably results in either the formation of nanofibers or remaining unpulverized parts or both, and a considerable amount of coarse structures are ultimately contained. The average fiber diameter is calculated as the number average value of 50 fibers, but the presence of nanofibers which cause agglomerates and the presence of unpulverized parts are not evaluated. To confirm the dispersibility of cellulose fibers in the resin, the presence or absence of coarse structures having a maximum diameter of 200 $\mu$m or greater in a dry state is confirmed, but the presence or absence of coarse structures smaller than that is not evaluated.

In the following Patent Literature 3, a cellulose raw material is treated with an enzyme in advance to decompose the amorphous regions, and then micronized to improve the homogeneity and dispersibility of the fibers, thereby obtaining cellulose microfibers. The fiber diameter, fiber length, and fibrillation rate are adjusted by changing the number of times the material is processed with the refiner. However, even this processing method inevitably results in either the formation of nanofibers or remaining unpulverized parts, or both, and ultimately a considerable amount of coarse structures are contained.

As a method for solving such a problem, a method of adding a surfactant, a method of removing water by solvent replacement and then drying, a method of chemically modifying the cellulose, etc., have been reported. In Patent Literature 4, in the same manner as Patent Literature 3, a cellulose raw material is treated with an enzyme in advance to decompose the amorphous regions, and then micronized to obtain cellulose microfibers having a fiber diameter distribution coefficient of variation of 1.1 or less. The maximum fiber diameter of CNF-B, which are subjected to a weakened micronization treatment to obtain microfibers, is 1.271 $\mu$m, and no agglomerates or undisintegrated parts are contained in 100 observed fibers, but the minimum fiber diameter is 0.022 $\mu$m and a considerable amount of nanofiber parts are contained. If a stabilizer or surfactant is not added to such microfibers, agglomerates due to agglomeration of nanofibers occurs during storage, and agglomerates due to entanglement of nanofibers occurs during stirring, and ultimately a considerable amount of coarse structures are contained.

In the following Patent Literature 5, a cationic surfactant is added to cellulose nanofibers, water is removed in the presence of a polyhydric alcohol, and at the same time, hydrophobization is performed with a silane coupling agent, and shear force is applied in a rubber component to obtain a composite material which uses nanofibers but which does not contain coarse structures of 1 $\mu$m or greater. By using such a special method, it is finally possible to achieve the effect of a filler, but the surfactant and silane coupling agent are not of natural origin, and their use inhibits the biodegradability of the cellulose. Furthermore, this is not a general-purpose technique which can be used for purposes other than compounding with rubber, and the cost is very high.

As a method for obtaining cellulose microfibers without using mechanical or chemical treatment, a method of dissolving a cellulose in a solvent and performing wet spinning or electrospinning has been reported. In the following Patent Literature 6, cellulose is dissolved in a cuprammonium solution and subjected to flow-induced tension spinning to obtain cellulose microfibers. While this method does not generate nanofibers or residual unpulverized parts, if the single filaments come into contact with each other before sufficient solvent removal is performed in the spinning funnel, unified fibers in which the fibers are firmly bonded to each other are generated. Further, since the solvent removal is insufficient before copper removal with sulfuric acid, strong hydrogen bonds are formed between the fibers during copper removal, and unified fibers in which the fibers are firmly bonded to each other are generated. These unified fibers are also a type of coarse structure, and in accordance with the application, they may impair the inherent performance of the microfibers. Furthermore, it is necessary to impart a certain degree of self-adhesiveness between the single filaments in order to use them as spun filaments, and the copper removal from the solvent is performed by scouring in a laminar sulfuric acid bath. In this method, since the structure is fixed without the tension generated by spinning being relaxed, the obtained fibers have excessive orientation of the cellulose molecular chains and are prone to fibrillation. When filaments which are prone to fibrillation are used as fillers, nanofibers are generated during kneading, whereby agglomerates are generated due to agglomeration.

In the following Patent Literature 8, the concentration of cellulose dissolved in the cuprammonium solution is reduced, and the cellulose solution is subjected to flow-induced tension spinning, followed by depositing in layers onto a net, to obtain a nonwoven fabric composed of cellulose microfibers. Even with this method, the single filaments come into contact with each other before sufficient solvent removal is performed in the funnel, and strong hydrogen bonds are formed between the fibers during copper removal, resulting in the generation of unified fibers.

In the following Patent Literature 7, a cellulose is dissolved in a cuprammonium solution and electrospun to obtain uniform cellulose microfibers having a fiber diameter CV value of 11 to 30% and few particulate parts having a diameter of 3.0 $\mu$m or more. With this method, since no unpulverized parts remain, the cellulose is substantially not oriented, and fibrillation is unlikely, even if used as a filler, nanofibers are unlikely to be generated during kneading. However, electrospinning is a method in which it is difficult to finely adjust the coagulation rate, and the cellulose fibers may reach the collector before sufficient solvent removal is performed, resulting in the generation of unified fibers in which the fibers are firmly bonded to each other. Furthermore, the particulate parts in the sheet are 500 parts/mm$^2$ or less, and there is a considerable amount of particulate parts when converted into weight units. Further, fibers obtained by electrospinning have problems such as low cellulose orientation, resulting in limited uses, strong agglomeration during drying due to low degree of crystallinity, and low productivity.

[CITATION LIST]

[PATENT LITERATURE]

[PTL 1] Japanese Unexamined Patent Publication (Kokai) No. 2020-55951
[PTL 2] Japanese Unexamined Patent Publication (Kokai) No. 2020-125417
[PTL 3] Japanese Patent No. 6799565
[PTL 4] Japanese Patent No. 6845510
[PTL 5] Japanese Unexamined Patent Publication (Kokai) No. 2021-14512
[PTL 6] Japanese Patent No. 5584445
[PTL 7] Japanese Patent No. 4871196
[PTL 8] Japanese Patent No. 7101879

SUMMARY

[TECHNICAL PROBLEM]

In view of the state of the art described above, an object of the present invention is to provide cellulose microfibers (fibrous cellulose) which has a uniform fiber diameter distribution with a low ratio of both cellulose nanofibers and coarse structures and which can be used for a variety of general purposes.

[SOLUTION TO PROBLEM]

As a result of rigorous investigation and repeated experimentation to achieve the object described above, the present inventors have discovered that the causes of the formation of coarse structures are the agglomeration of nanofiberized cellulose, the remaining unpulverized parts of the raw cellulose, and strong adhesion between fibers. It has been unexpectedly discovered that by controlling these to a certain level or less, it is possible to obtain cellulose microfibers (fibrous cellulose aggregates) which have a uniform fiber diameter and few coarse structures without adding chemical substances or modifying cellulose, leading to the completion of the present invention.

Specifically, the present invention is as follows.

[1] Cellulose fibers, having an average fiber diameter in a dry state observed by an electron microscope of 0.3 $\mu$m or more and 3.0 $\mu$m or less, wherein a ratio of fibers having a fiber diameter of less than 0.1 $\mu$m is 5% or less, and a ratio of coarse structures, indicated by a ratio of the number of fibers having a wet fiber diameter of 20 $\mu$m or more measured by optical automatic analysis, is 3.0% or less.
[2] The cellulose fibers according to [1], having a wet average fiber diameter of 1.0 $\mu$m or more and less than 10.0 $\mu$m.
[3] The cellulose fibers according to [1] or [2], having a wet average fiber length of 3000 $\mu$m or less.
[4] The cellulose fibers according to any of [1] to [3], wherein a fiber diameter coefficient of variation is 1.00 or less.
[5] The cellulose fibers according to any of [1] to [4], wherein a fiber diameter agglomeration constant is 5.0 or less.
[6] The cellulose fibers according to any of [1] to [5], wherein a crystal structure of cellulose constituting the cellulose fibers is type II.
[7] The cellulose fibers according to any of [1] to [6], wherein a degree of crystallinity of cellulose constituting the cellulose fibers is 30% or more and 90% or less.
[8] A composition comprising the cellulose fibers according to any of [1] to [7].
[9] A porous material comprising the cellulose fibers according to any of [1] to [7].

[ADVANTAGEOUS EFFECTS OF INVENTION]

The cellulose fibers according to the present invention are uniform cellulose microfibers (fibrous cellulose aggregates) which have few coarse structures, without the addition of chemical substances or modification of cellulose, and thus, can be used for a variety of general purposes, such as fillers for reinforcing resins and rubbers, and as base materials for porous materials such as filters.

BRIEF DESCRIPTION OF DRAWINGS

FIG. 1 is an SEM image of the cellulose fibers obtained in Example 1.
FIG. 2 is an SEM image of the cellulose fibers obtained in Comparative Example 1.
FIG. 3 is an SEM image of the cellulose fibers obtained in Comparative Example 7.
FIG. 4 is an SEM image of the surface of a porous sheet prepared from the cellulose fibers of Example 1.
FIG. 5 is an SEM image of the surface of a porous sheet prepared from the cellulose fibers of Comparative Example 7.
FIG. 6 is an SEM-EDX image of a tensile fracture surface of a cellulose fiber-rubber composite in which the cellulose fibers of Example 1 are combined.
FIG. 7 is an SEM-EDX image of a tensile fracture surface of a cellulose fiber-rubber composite in which the cellulose fibers of Comparative Example 6 are combined.
FIG. 8 is an SEM image of the cellulose fibers obtained in Comparative Example 4.
FIG. 9 is an SEM image of the cellulose fibers obtained in Comparative Example 8.
FIG. 10 is an SEM image of the surface of a porous sheet prepared from the cellulose fibers of Comparative Example 4.
FIG. 11 is an SEM-EDX image of a tensile fracture surface of a cellulose fiber-rubber composite in which the cellulose fibers of Example 1-3 are composited.

DESCRIPTION OF EMBODIMENTS

The embodiments of the present invention will be described in detail below.

An embodiment of the present invention provides cellulose fibers, having an average fiber diameter in a dry state observed by an electron microscope of 0.3 $\mu$m or more and 3.0 $\mu$m or less, wherein a ratio of fibers having a fiber diameter of less than 0.1 $\mu$m is 5% or less, and a ratio of coarse structures indicated by a ratio of the number of fibers having a wet fiber diameter of 20 $\mu$m or more measured by optical automatic analysis is 3.0% or less.

[Cellulose Fibers]

In the present description, the term "cellulose fibers" refers to structures (aggregates) composed of fibrous cellulose, the production method thereof is not particularly limited, and examples thereof include a method of micronizing a cellulose raw material by physical force, a method of micronizing a cellulose raw material by chemical force, and a method of dissolving a cellulose raw material in a solvent and forming the solution into fibers. These methods can be combined. In order to reduce the cellulose nanofibers, which cause coarse structures and undisintegrated parts of the raw material, a method of dissolving the cellulose raw material in a solvent and forming the solution into fibers is preferable. Dissolving the raw material in a solvent also makes it possible to remove minute foreign substances by filtration or centrifugation.

In the present description, the term "fiber diameter" of cellulose fibers refers to a value measured when the cellulose is in a dry state, and "average fiber diameter" refers to a number average value. There are various methods for measuring in a dry state, and a method can be selected in accordance with the fiber diameter. As will be described later, in the Examples, measurements were made using an electron microscope.

The cellulose fibers of the present embodiment are evaluated not only in a dry state but also in a wet state. In the evaluation in a dry state using an electron microscope, it is difficult to distinguish between fibers which are originally agglomerated and fibers that agglomerated during drying. Furthermore, the results vary depending on the measurement location. There is a limit to the number of fibers which can be measured in a dry state, and though there is a certain degree of accuracy in evaluating the average value, it is difficult to evaluate the distribution. Results of evaluation in a wet state are distinguished from results of evaluation in a dry state by expressing the fiber diameter as "Wet fiber diameter" and the average fiber diameter as "Wet average fiber diameter." Note that since cellulose fibers swell in water, the "Wet fiber diameter" is greater than the "fiber diameter."

Though there are various methods for evaluating in a wet state, a microscope or an optical automatic analysis method is preferable because fiber diameter and fiber length can be distinguished, and selection can be carried out in accordance with fiber diameter. As will be described later, in the Examples, an optical automatic analysis method was used for measurement.

The "average fiber diameter" of the "fiber diameter" of the cellulose fibers of the present embodiment is 0.3 $\mu$m or more and 3.0 $\mu$m or less. When the average fiber diameter is 0.3 $\mu$m or more, agglomeration of fibers due to intermolecular forces during storage, agglomeration due to entanglement during stirring, and agglomeration due to hydrogen bonds during drying can be suppressed. The average fiber diameter is preferably 0.4 $\mu$m or more, more preferably 0.5 $\mu$m or more, and further preferably 0.7 $\mu$m or more. Conversely, when the average fiber diameter is 3.0 $\mu$m or less, since the number of fibers per unit weight increases, there are effects such as a higher effect of addition as a filler and a larger specific surface area when formed into a porous material. The average fiber diameter is preferably 2.5 $\mu$m or less, more preferably 2.0 $\mu$m or less, further preferably 1.5 $\mu$m or less, and most preferably 1.0 $\mu$m or less.

The "ratio of fibers having a fiber diameter of less than 0.1 $\mu$m" of the cellulose fibers of the present embodiment is 5% or less. By setting the amount of nanofibers having a fiber diameter of less than 0.1 $\mu$m to 5% or less, not only can the agglomeration of fibers during storage, agglomeration due to entanglement during stirring, and agglomeration due to hydrogen bonds during drying be suppressed, but also deterioration of handleability due to an increase in viscosity can be prevented. The "ratio of fibers having a fiber diameter of less than 0.1 $\mu$m" is preferably 4% or less, more preferably 3% or less, further preferably 2% or less, particularly preferably 1% or less, and most preferably 0%.

In the present description, the term "cellulose nanofibers" refers to cellulose fibers having a fiber diameter of less than 0.1 $\mu$m, and the term "cellulose microfibers" refers to cellulose fibers having a fiber diameter of 0.1 $\mu$m or more and less than 9.7 $\mu$m.

In the present description, the term "coarse structure" refers to a structure in which the maximum width of the short side perpendicular to the long side is 20.0 $\mu$m or more in a wet state, as will be described later. Coarse structures include not only cellulose lumps, such as aggregates of structures smaller than 20.0 $\mu$m, including agglomerates due to agglomeration of nanofibers or entanglement of fibers and unified fibers in which fibers are firmly bonded to each other, and structures originally larger than 20.0 $\mu$m, including the remaining unpulverized parts of the cellulose raw material and thick fibers, but also foreign substances contained in the cellulose raw material. The reason for using the measurement results in a wet state is that evaluation in a dry state does not allow distinction between whether the structure was originally aggregated or aggregated during drying. Use of the measurement in a wet state is also because it is easy to increase the number of fibers to be measured to enable accurate evaluation of their distribution. Reducing the number of structures of 20.0 μm or more in a wet state makes it possible to reduce the number of structures of approximately 10.0 μm or more in a dry state, though it depends on the preparation method and crystal structure of the cellulose fibers.

The "ratio of coarse structures" of the cellulose fibers of the present embodiment, which will be described later, is 3.0% or less. When the ratio of coarse structures is 3.0% or less, effects such as a reduction in defects when used as a filler, a reduction in defects when used as a base material for a porous material, and an improvement in functionality by increasing the number of fibers can be expected. The "ratio of coarse structures" is preferably 2.0% or less, more preferably 1.0% or less, and further preferably 0.5% or less. The lower the "ratio of coarse structures," the more preferable, but 0.1% or more is preferable from the viewpoint of production efficiency.

The "fiber diameter coefficient of variation" of the cellulose fibers of the present embodiment is preferably 1.00 or less. Fibers having a uniform fiber diameter with a fiber diameter coefficient of variation of 1.00 or less are less susceptible to deterioration of function due to cutting of thin fibers and to defects due to thick fibers, are likely to exhibit desired performance in various applications, and can have a uniform fiber length when shortened by physical impact. The "fiber diameter coefficient of variation" is preferably 0.70 or less, more preferably 0.50 or less, further preferably 0.40 or less, particularly preferably 0.30 or less, and most preferably 0.20 or less. The lower the "fiber diameter coefficient of variation," the more preferable, but from the viewpoint of production efficiency, a value of 0.05 or more is preferable.

The "wet average fiber diameter" of the cellulose fibers of the present embodiment, which will be described later, is preferably 1.0 μm or more and 10.0 μm or less. By setting the wet average fiber diameter to 1.0 μm or more, agglomeration of the fibers during storage, agglomeration due to entanglement during stirring, and agglomeration due to hydrogen bonding during drying can be suppressed. The "wet average fiber diameter" is preferably 1.3 μm or more, and particularly preferably 1.7 μm or more. Conversely, when the "wet average fiber diameter" is 10.0 μm or less, since the number of fibers per unit weight increases, there are effects such as a higher effect of addition as a filler and a larger specific surface area when formed into a porous material. The "wet average fiber diameter" is preferably 8.3 μm or less, more preferably 6.7 μm or less, further preferably 5.0 μm or less, and particularly preferably 3.3 μm or less.

In the present description, the term "agglomeration constant" is an index representing the degree of agglomeration of the cellulose fibers, and is defined by the following formula:

$$\text{Agglomeration constant} = (\text{Wet average fiber diameter} / \text{average fiber diameter})$$

Cellulose fibers which are mostly nanofibers having a fiber diameter of less than 0.1 μm appear to be dispersed in local observations such as with an SEM, but in reality, some of the fibers are not pulverized or a network structure is formed by hydrogen bonds. The wet fiber diameter of such cellulose fibers tends to be large. Furthermore, cellulose fibers which appear to be independent fibers overlapping in an SEM but are actually mostly unified fibers in which the fibers are firmly bonded to each other also tend to have a large wet fiber diameter.

The "agglomeration constant" of the cellulose fiber diameter in the present embodiment is preferably 5.0 or less. By setting the agglomeration constant to 5.0 or less, effects such as a reduction in defects when used as a filler, a reduction in defects when used as a base material for a porous material, and an improvement in functionality by increasing the number of fibers can be expected. The "agglomeration constant" is more preferably 4.0 or less, further preferably 3.0 or less, and particularly preferably 2.5 or less. The "agglomeration constant" is preferably lower, but from the viewpoint of production efficiency, it is preferably 1.0 or more, and more preferably 1.5 or more.

The "wet fiber diameter coefficient of variation" of the cellulose fibers of the present embodiment is preferably 1.00 or less. Fibers having a uniform fiber diameter with a wet fiber diameter coefficient of variation of 1.00 or less are less susceptible to deterioration of function due to cutting of thin fibers and to defects due to thick fibers, and are likely to exhibit desired performance in various applications. Furthermore, the fiber length can be made uniform when shortening the fibers by physical impact. The "wet fiber diameter coefficient of variation" is preferably 0.90 or less, more preferably 0.80 or less, further preferably 0.70 or less, particularly preferably 0.60 or less, and most preferably 0.50 or less. The lower the "wet fiber diameter coefficient of variation," the more preferable, but from the viewpoint of production efficiency, 0.20 or more is preferable.

The "crystal structure" of the cellulose fibers of the present embodiment is not particularly limited, and various celluloses such as type I, type II, type III, and type IV can be used. The "degree of crystallinity" of the cellulose fibers according to the present invention is also not particularly limited, and cellulose fibers of any degree of crystallinity can be used. When the fiber length is adjusted in a wet state, a type II crystal structure, which allows the fibers to be cut with a weak force and tends to be uniform, is preferable.

The "degree of crystallinity" of the cellulose fibers of the present embodiment is preferably 30% or more and 90% or less. When the degree of crystallinity is a certain level or more, agglomeration during drying can be reduced and the strength of the cellulose fibers is also increased, and thus, the degree of crystallinity is preferably 30% or more, more preferably 40% or more, and particularly preferably 50% or more. Conversely, when the degree of crystallinity is a certain level or less, dispersibility improves when used as a filler, and fibers bond at intersections when used as a base material for a porous material, increasing the strength of the base material, and thus, the degree of crystallinity is preferably 90% or less, more preferably 80% or less, and further preferably 70% or less. Note that several methods for calculating the degree of crystallinity of cellulose have been proposed, but in the present embodiment, the degree of crystallinity refers to the degree of crystallinity as calculated by the Segal method.

The cross-sectional shape of the cellulose fibers of the present embodiment is not particularly limited, and fibers of various cross-sectional shapes such as round, irregular, and non-uniform shapes can be used, and the surface may be fibrillated. A round cross section is preferable from the viewpoint of the reinforcing effect when used as a filler and the repair effect when a porous material is used as a filter. Furthermore, when using cellulose fibers as a filler, it is preferable that the surface be fibrillated in order to prevent the fibers from coming off.

The "fiber length" and "wet fiber length" of the cellulose fibers of the present embodiment can be adjusted to any length. When using a method of dissolving cellulose in a solvent and forming the solution into fibers, the cellulose fibers can be obtained in the form of very long fibers, or it can be obtained in the form of short fibers by cutting the obtained long fibers. When the cellulose fibers are used in the form of short fibers, the fiber length and wet fiber length can be selected in accordance with the application. Note that the "average fiber length" and "wet average fiber length" in the present invention represent the length-weighted average fiber length.

When the cellulose fibers of the present embodiment are used for filler applications, the "wet average fiber length" is preferably 20 $\mu$m or more and 3000 $\mu$m or less. When the wet average fiber length is a certain level or more, since the fibers are less likely to fall off even when stress is applied, and the reinforcing effect is high, the wet average fiber length is more preferably 30 $\mu$m or more, further preferably 40 $\mu$m or more, and particularly preferably 50 $\mu$m or more. Conversely, when the wet average fiber length is a certain level or less, since the number of fibers increases, resulting in a high reinforcing effect, and the generation of coarse structures due to entanglement of the fibers during kneading can be suppressed, the wet average fiber length is more preferably 1000 $\mu$m or less, further preferably 800 $\mu$m or less, further preferably 600 $\mu$m or less, and particularly preferably 400 $\mu$m or less.

When the cellulose fibers of the present embodiment are used as a base material for a porous material, the "wet average fiber length" is preferably 50 $\mu$m or more and 3000 $\mu$m or less. When the wet average fiber length is a certain level or more, since entanglement of the fibers can be maintained and the porous structure can be maintained even if drying shrinkage occurs during drying, the wet average fiber length is more preferably 100 $\mu$m or more, and further preferably 200 $\mu$m or more. Conversely, when the wet average fiber length is a certain level or less, since entanglement of the fibers can be suppressed, the wet average fiber length is more preferably 2000 $\mu$m or less, further preferably 1000 $\mu$m or less, and particularly preferably 800 $\mu$m or less.

The "wet fiber length coefficient of variation" of the cellulose fibers of the present embodiment is preferably 1.00 or less. In fibers having a uniform fiber length with a wet fiber length coefficient of variation of 1.00 or less, the generation of agglomerates due to fiber entanglement can be suppressed. As a result, the fibers can exhibit desired performance when used in various applications. The "wet fiber length coefficient of variation" is more preferably 0.90 or less, further preferably 0.80 or less, particularly preferably 0.70 or less, and most preferably 0.60 or less. The lower the "wet fiber length coefficient of variation," the more preferable, but from the viewpoint of production efficiency, a value of 0.05 or more is preferable.

The cellulose fibers of the present embodiment can be made uniform in both fiber diameter and fiber length, and by making both uniform, the effects when the fibers are used in various applications can be efficiently exhibited. The "wet fiber diameter coefficient of variation" and the "wet fiber length coefficient of variation" are both preferably 1.00 or less. Preferably, both are 0.90 or less, more preferably both are 0.80 or less, further preferably both are 0.70 or less, particularly preferably both are 0.60 or less, and more particularly preferably both are 0.50 or less. It is preferable that both the "wet fiber length coefficient of variation" and the "wet fiber length coefficient of variation" be lower, but from the viewpoint of production efficiency, it is preferable that they be 0.05 or more.

The cellulose fibers of the present embodiment can be converted into a cellulose derivative by reacting a part of the hydroxyl groups thereof, and any substituent can be introduced in accordance with the required function. In order to maintain the biodegradability of the cellulose, a substituent which does not cause hydrophobization of the cellulose is preferable, and the degree of substitution is preferably 0.30 or less, more preferably 0.20 or less, particularly preferably 0.10 or less, and particularly preferably 0.05 or less. In order to maintain the biodegradation rate of cellulose and improve the environmental impact after degradation, it is preferable to use the cellulose as-is without derivatization.

The cellulose fibers of the present embodiment can be used as an aqueous solution obtained by the fibers being dispersed in water as necessary, and surfactants, inorganic salts, water-soluble polymers, etc., may be added thereto. If necessary, other liquids which are compatible with water may be added, or the fibers may be dispersed in a non-aqueous solvent. Naturally, the fibers may be mixed with other fibers, particles, fillers, and other solids. When a surfactant is added, an anionic, amphoteric, or nonionic surfactant is preferable from the viewpoint of improving the biodegradability of the cellulose and environmental impact after degradation, and the amount of the surfactant used is preferably 10% by weight or less. The surfactant is more preferably 3% by weight or less, further preferably 1% by weight or less, and particularly preferably 0.1% by weight or less, and it is most preferable that no surfactant be added.

The cellulose fibers of the present embodiment can be used in a dried solid state as necessary. In order to suppress agglomeration during drying, freeze drying, solvent replacement drying, solvent replacement freeze drying, supercritical drying, etc., may be performed. Surfactants, inorganic salts, oils, etc., may be added, and cellulose derivatives may be made by utilizing the hydroxyl groups of cellulose.

[Method for Production of Cellulose Fibers]

An example of a method for producing cellulose fibers according to the present invention will be described below, but the present embodiment is not limited to this production method.

The cellulose raw material is not particularly limited, and various raw materials can be selected. Examples of raw materials include wood pulp, non-wood pulp, cotton-based pulp such as cotton or cotton linter pulp, cellulose from sources such as sea squirt and seaweed, recovered pulp, recycled cellulose, etc. A mixture of two or more of these can be used. Among these, cotton and cotton linter pulp are preferable because of their high purity, and cotton linters are particularly preferable.

The solvent for dissolving the cellulose is not particularly limited, and various known solvents can be selected. Examples of solvents include cuprammonium solutions, viscose solutions, acids or alkali of specific concentrations, aqueous inorganic salt solutions such as zinc chloride, N-methylmorpholine N-oxide, and various ionic liquids. Among these, cuprammonium is preferable as the solvent from the viewpoints of adjusting the coagulation rate, facilitating reduction of the fiber diameter, and adjusting the fibrillation.

The method of dissolving the cellulose in a solvent and forming the solution into fibers is not particularly limited, and various spinning methods can be used. Examples of spinning methods include flow-induced tension spinning, in which the solution is extruded from a spinning nozzle having a large number of holes (orifices) and flows into a funnel, together with a coagulating liquid, for solvent removal, and coagulation is performed; air gap spinning, in which the solution is discharged into the air for drawing, and then coagulated with a coagulating liquid; dry spinning, in which drawing and solvent removal are performed in the air; melt blow spinning, in which drawing and coagulation are performed using a high-speed air stream; and electrospinning, in which the solution is charged, and thinned and accumulated by electrical repulsion. In particular, flow-induced tension spinning, air gap spinning, and melt blow spinning, with which the orientation of the cellulose can be controlled, are preferable. Particularly preferred is flow-induced tension spinning, with which the fiber diameter can be uniformized, fibers are unlikely to break even if the fiber diameter becomes thin, and strong adhesion between fibers can be suppressed.

An example in which cellulose is dissolved in a cuprammonium solution and flow-induced tension spinning is performed will be described below.

The concentration of the cellulose dissolved in the cuprammonium solution can be arbitrarily selected. Though it depends on the degree of polymerization of the cellulose to be dissolved, 1 to 20% by weight is preferable. After dissolving the cellulose, it is preferable to remove foreign substances and undissolved substances by performing filtration or centrifugation. When the concentration is at a certain level or higher, the viscosity of the stock solution increases and filament breakage in the funnel is suppressed, which results in the effect of uniform drawing and the effect of making it less likely for the single filaments to bond firmly to each other by coming into contact with other fibers before sufficient solvent removal occurs, resulting in a uniform fiber diameter. The single filament strength of the obtained fibers is also improved.

The concentration at which cellulose is dissolved in the cuprammonium solution is more preferably 2% by weight or more, further preferably 3% by weight or more, and particularly preferably 4% by weight or more. When the concentration is equal to or less than a certain level, the fiber diameter can be thinned by making it easier to draw, and foreign substances can be easily removed by filtering or centrifuging the stock solution. The concentration at which cellulose is dissolved in the cuprammonium solution is more preferably 9% by weight or less, further preferably 8% by weight or less, and particularly preferably 7% by weight or less. The ammonia concentration is preferably 10% by weight or less, more preferably 9% by weight or less, and further preferably 8% by weight or less. Within this range, coagulation unevenness is less likely to occur, and firm bonding between fibers can be suppressed.

The nozzle for discharging the cellulose solution may have any shape. The number of holes (orifices) is preferably 10 to 2000. When the number of holes (orifices) is 2000 or less, the difference in coagulation between the inner and outer portions can be kept within a certain range, enabling the fiber diameter to become uniform. Furthermore, by making the flow rate of the coagulating liquid equal to or less than a certain level, the flow in the funnel can be made laminar, and the fibers can be prevented from contacting each other before sufficient solvent removal is performed. The number of holes (orifices) is more preferably 1500 or less, further preferably 1000 or less, and particularly preferably 500 or less. From the viewpoint of productivity, the number of holes (orifices) is more preferably 50 or more. Furthermore, the hole (orifice) diameter is preferably 0.05 to 0.50 mm. When the hole (orifice) diameter is 0.05 or more, productivity is high, sufficient drawing can be performed, and the strength of the cellulose fibers can be increased. The discharging speed of the cellulose solution can be made equal to or less than a certain level, and the cellulose solution is prevented from oscillating in the coagulating liquid, whereby the fibers can be prevented from contacting each other before sufficient solvent removal is performed. The hole (orifice) diameter is more preferably 0.08 mm or more, and further preferably 0.10 mm or more. Conversely, when the hole (orifice) diameter is 0.50 mm or less, the solution discharged from the spinneret can be maintained at a certain distance, whereby the fibers can be prevented from contacting each other before sufficient solvent removal is performed, and excessive drawing can be suppressed, and as a result, the cellulose fibers are less likely to be fibrillated, and the generation of thin fibers can be suppressed when shortening the fibers by physical impact or when kneading. The hole (orifice) diameter is more preferably 0.40 mm or less, and further preferably 0.30 mm or less. Furthermore, the distance between ends of adjacent holes (orifices) is preferably 0.60 to 2.00 mm. When the distance between holes (orifices) is 0.60 mm or more, the fibers can be prevented from contacting each other even if the cellulose solution oscillates slightly in the coagulating liquid. Furthermore, since the spinneret has holes (orifices) arranged concentrically or in a plurality of rows, the cellulose solution discharged from the holes (orifices) in the outermost layer comes into contact with fresh coagulating liquid, whereas the cellulose solution discharged from the holes (orifices) in the inner layers may experience uneven coagulation. When the distance between holes (orifices) is 0.60 mm or more, the coagulating liquid is easily diffused into the inner layer, and uneven coagulation of the cellulose solution discharged from the holes (orifices) in the inner layer can be suppressed, and as a result, contact between the fibers before sufficient solvent removal is performed can be suppressed. The distance between the holes (orifices) is more preferably 0.80 mm or more, and further preferably 1.0 mm or more.

Any type of coagulating liquid can be used as long as it can be used to remove ammonia. From the viewpoints of economy and safety, it is preferable to use water with an adjusted temperature. In order to obtain cellulose fibers having a small average fiber diameter, it is necessary to perform drawing at a low spinning solution temperature. The coagulation of the cellulose solution discharged from the holes in the inner layers may be insufficient. If copper removal is performed in this state, strong hydrogen bonds will be formed between the fibers. Thus, it is preferable to first perform drawing and coagulation at a low spinning solution temperature, and then complete the coagulation of the cellulose solution discharged from the holes in the inner layers at a higher spinning solution temperature.

After ammonia removal in the funnel and fiber formation, copper removal can be performed by any method. Examples thereof include a method of adding acid into the funnel, a method of discharging blue filaments into an acid bath after they leave the funnel, a method of redirecting blue filaments after they leave the funnel and immersing them in an acid bath, a method of dripping acid onto blue filaments, a method of receiving blue filaments on a net and spraying the acid thereon, and a method of receiving blue filaments in a tank and adding acid thereto in a batchwise manner. By performing copper removal with a low tension applied on the filaments, the cellulose fibers are less likely to be fibrillated. Furthermore, the acid between the fibers is easily renewed, the copper removal efficiency is improved, whereby cellulose fibers having less residual copper and residual sulfuric acid can be obtained. The cellulose fibers production method of the present embodiment adopted a method of receiving blue filaments on a net after they leave the funnel, relaxing the tension, and then spraying sulfuric acid thereon, and a method of spraying sulfuric acid on blue filaments after they leave the funnel and redirecting the blue filaments to suppress an increase in tension. When ammonia removal is performed by a method such as electrospinning, in which the cellulose drawing is insufficient, the strength of the obtained cellulose fibers can be increased by applying a certain degree of tension during copper removal.

After copper removal using an acid, the method for removing the acid can be arbitrarily selected. Since the fibers are thin, the liquid between the fibers is not easily renewed when removing the acid. Thus, a method with which the liquid can be easily renewed is preferable. In the cellulose fibers production method of the present embodiment, the fibers were repeatedly washed with warm water to remove sulfuric acid.

It is preferable that cellulose fibers have low residual copper and sulfuric acid. If these are high, they may cause the fibers to agglomerate during drying, have a reduced strength during storage, and have a reduced rate of biodegradation.

When drying the cellulose fibers, a method thereof can be arbitrarily selected. For example, heat drying, reduced pressure drying, air drying, freeze drying, solvent replacement drying, supercritical drying, or a combination of these may be used. An oil may be added during drying to suppress agglomeration.

The fiber diameter of the cellulose fibers can be arbitrarily adjusted by controlling, for example, the drawing ratio based on the concentration of dissolved cellulose, the diameter of the nozzle for discharging the cellulose solution, the shape of the funnel, and the combination of the temperature, composition, and flow rate of the coagulating liquid.

Various methods can be used to adjust the fiber length of cellulose fibers in accordance with the required fiber length, including a method of cutting the fibers with a blade and a method of shortening the fibers by applying a physical impact to the fibers.

Examples of the method of cutting the cellulose fibers with a blade include a rotary cutter, a guillotine cutter, and a cutter mill. The cellulose fibers may be cut in a dry state, a wet state, or a state in which the fibers are suspended in water or an organic solvent. Chemical or heat treatment may be performed in advance. The method of cutting with a blade makes it easy to maintain a certain fiber length, but there is a limit to how short the fiber length can be.

Examples of the method of fiber shortening by physical impact include mixers, homogenizers, ball mills, beaters, disc refiners, grinders, high-pressure homogenizers, etc. Though the method of fiber shortening by physical impact can shorten the fiber length, this method makes it likely for the fiber length of the obtained fibers to have a certain distribution. In particular, when natural cellulose is micronized by physical force, a distribution of fiber diameters occurs. Since thin parts which are easily cut and thick parts which are not easily cut are mixed, a distribution of fiber lengths is likely to occur. Since the cellulose of the present application has a uniform fiber diameter, the spread of the fiber length distribution can be suppressed to a certain extent. When fiber shortening is performed by physical impact, the fiber length distribution can be further limited by cutting the cellulose to a certain length with a blade in advance and then applying physical impact, rather than immediately shortening long fibers. After fiber shortening, it is also possible to remove fibers having an excessively short fiber length or fibers still having a long fiber length by filtering or classifying the fibers with a filter.

When shortening fibers by physical impact, if the impact is excessively strong, the fibers will fibrillate or break, resulting in a wide distribution of fiber diameters. In other words, the purpose of applying physical impact to fibers is to shorten the fiber length or to peel off the adhered fibers that are weakly associated with each other, not to reduce the fiber diameter. If significant fiber length shortening is desired, it is preferable to incorporate techniques such as limiting the orientation of the cellulose or reducing the degree of polymerization of the cellulose to suppress fiber fibrillation as necessary.

[Uses of Cellulose Fibers]

The cellulose fibers of the present embodiment can be used as fillers to be added to resins or rubbers, porous materials that can be used in filters, adsorbents, sound absorbing materials, heat insulating materials, coating agents, base materials for artificial leather, anti-settling agents for liquid products, etc. The cellulose fibers, which have few nanofibers and coarse structures, can be uniformly dispersed as fillers and can produce uniform porous materials without the addition of a surfactant or hydrophobizing the cellulose.

An example of using the cellulose fibers of the present embodiment as a porous material will be described below. Naturally, the present invention is not limited thereto. When using the cellulose fibers of the present embodiment to produce a porous material, the cellulose fibers may be used alone, may be mixed with other cellulose fibers or fibers of other materials, or may be laminated with another porous material. An example of forming a porous material using only cellulose fibers will be described below. Note that a surfactant or pore size retaining agent was not added when forming a porous material using the cellulose fibers, and the cellulose was not hydrophobized, a sheet was formed by the simplest method of heating and drying, and the effect of the shape of the cellulose fibers on the formation of the porous material was evaluated.

The method for forming a porous material from the cellulose fibers is not particularly limited, and various known methods can be used. Examples thereof include air-laid method, spunlace method, needle punch method, papermaking method, chemical bond method, and freeze-drying method. The papermaking method is preferable because it is a simple method for obtaining a homogeneous porous material.

The liquid in which the cellulose fibers are suspended during papermaking is preferably a liquid in which the cellulose does not agglomerate. From the viewpoint of dispersibility, water is preferable, but from the viewpoints of drying efficiency and suppression of agglomeration during drying, alcohols such as methanol, ethanol, isopropyl alcohol, and t-butanol, ketones such as acetone and methyl ethyl ketone, and ethers such as diethyl ether are also preferable. Naturally, these liquids can be mixed in any ratio and used.

The method of drying after papermaking is not particularly limited, but when the crystal structure of the cellulose fibers is type II, the temperature is preferably 200°C or less, more preferably 190° or less, and further preferably 180°C or less.

In the following Examples, the obtained cellulose fiber sheets as porous materials were used to carry out their performance evaluation.

An example in which the cellulose fibers of the present embodiment are used as a filler will be described below. Naturally, the present embodiment is not limited thereto. When the cellulose fibers of the present embodiment are used as a filler, a substance with which it is to be mixed is not particularly limited, and the cellulose fibers can be used as a filler for various resins and rubbers. An example in which a composite of the cellulose fibers and rubber is obtained by mixing natural rubber latex and the cellulose fibers to prepare a master batch, kneading, and then vulcanizing and hot press molding will be described below. Note that in the following Examples, when the cellulose fibers and rubber were composited, solvent replacement or freeze drying of the cellulose fibers, the addition of a surfactant or polyhydric alcohol, hydrophobization of the cellulose, the addition of other fillers, etc., were not performed, and compositing was performed by a simple method, and the effect of the shape of the cellulose fibers on the compositing was evaluated.

The cellulose fibers and natural rubber latex may be mixed by adding the cellulose fibers in a dry state or in a slurry state given by suspending the cellulose fibers in water or an organic solvent. To disperse the cellulose fibers more uniformly, it is preferable that the cellulose fibers in a slurry state be added. The cellulose fibers and natural rubber latex are preferably mixed using a planetary centrifugal mixer. The obtained aqueous solution in which the natural rubber latex and cellulose fibers are suspended is dried to prepare a master batch.

The cellulose concentration in the masterbatch is preferably 1.0 to 20.0% by weight or more. Since cellulose has high dispersibility and is unlikely to form a network structure in the presence of water, when the cellulose concentration is low, the cellulose fibers will sediment during drying, resulting in poor uniformity of the obtained masterbatch. The lower limit of the cellulose concentration in the masterbatch is more preferably 1.5% by weight or more, and further preferably 2.0% by weight or more.

A known method can be used for kneading the obtained master batch. For example, a Banbury mixer or an oven roller can be used. After kneading the master batch, stearic acid, zinc oxide, sulfur, and a vulcanization accelerator are added and further kneading is performed. Carbon black or the like may be added as necessary. Thereafter, vulcanization and molding are performed by hot pressing and cooling pressing to obtain a composite of cellulose fibers and rubber. When the crystal structure of the cellulose fibers is type II, the temperature of the series of operations is preferably 200°C or less, more preferably 190°C or less, and further preferably 180°C or less. The obtained composite is punched into a dumbbell shape and the composite is evaluated.

The cellulose fibers of the present embodiment are biodegradable in compost, soil, and the ocean. Biodegradation in the ocean, in particular, is difficult due to the small number of microorganisms and the low temperature rise. Thus, in order to increase the degradation rate in the ocean, it is preferable that the cellulose not be hydrophobically modified. Furthermore, in consideration of the safety of the degradation product, it is preferable that surfactants or additives depending on the application not be added.

EXAMPLES

The present invention will be described in detail below with reference to Examples and Comparative Examples, but the present invention is not limited to these Examples. All operations, unless otherwise specified, were carried out in an environment of 23°C and 55% RH.

First, the measurement methods used in the Examples and Comparative Examples will be described.

[Average Fiber Diameter]

The solid content concentration of the cellulose fibers in the pure water is adjusted to 0.10 to 0.01% by weight, and the cellulose fibers are sedimented by centrifugation and resuspended in ethanol three times to replace the solvent with ethanol. The cellulose fibers are further sedimented by centrifugation and resuspended in t-butanol three times to replace the solvent with t-butanol. After solvent replacement, the fibers are freeze-dried and osmium is vapor-deposited thereon to prepare an observation sample. This sample is observed with an electron microscope at a magnification of 1000-fold, 10000-fold, or 30000-fold depending on the fiber diameter. Specifically, two diagonal lines are drawn on the observation image, one straight line passing through the intersection of the diagonal lines is arbitrarily drawn, and the widths of 25 fibers intersecting with this straight line are visually measured. The observation location is changed, another location is magnified and the same measurement is performed, observing a total of four locations, and the average value is calculated from the widths of a total of 100 fibers to obtain the average fiber diameter.

When visually measuring the fiber width, if two or more fibers are found to have adhered together and there is no separated portion within the field of view of the image, they are considered to have adhered together at the sample preparation stage, and the width of each fiber is measured as if they were separate fibers.

[Fiber Diameter Coefficient of Variation (CV)]

The standard deviation of the 100 measured values in the average fiber diameter measurement is calculated using the following formula:

Fiber diameter coefficient of variation = {(standard deviation of fiber diameter)/(average fiber diameter)}

[Ratio of Nanofibers]

The ratio of nanofibers is calculated from the measurement values of 100 fibers in the average fiber diameter measurement using the following formula:

Ratio of nanofibers (%) = {(number of fibers having fiber diameter of less than 0.10 $\mu$m)/ 100} $\times$ 100

[Wet Average Fiber Diameter]

The wet average fiber diameter is measured by optical automatic analysis using a Valmet FS5 Fiber Image Analyzer, manufactured by Valmet. Accurate measurements are impossible for fibers having a diameter which is excessively small due to resolution restrictions. For cellulose fibers having an average fiber diameter of 0.3 μm or less measured by electron microscopy, their values are listed as reference values.

The solid content concentration of the cellulose fibers in pure water is automatically adjusted to a range of 0.005 to 0.0005% by weight using "Valmet FS5", 300 cc thereof is placed in a plastic beaker, the mixture is then dispersed in the beaker for 1 minute using a bath type ultrasonic disperser, the disperser is installed in the Valmet FS5, and various parameters are set as follows and measurements are performed.

Minimum fiber length [mm]: 0
Maximum fiber length [mm]: 7.6
Minimum fiber width [μm]: 0
Maximum fiber width [μm]: 20
Fiber width calculation:1. All fibers
Images per analysis: 2000
Analysis mode: 1. Normal
Image noise level [%]: 3

The fiber width (unit: μm) obtained from the measurement result is used as the wet average fiber diameter.

When the wet average fiber diameter cannot be measured by optical automatic analysis within the range of the solid content concentration of the cellulose fibers in pure water of 0.005 to 0.0005% by weight, the solid content concentration is increased by 0.005% by weight from 0.005% by weight, and the wet average fiber diameter is measured while changing the concentration to 0.010% by weight, 0.015% by weight, 0.020% by weight, and 0.025% by weight. When the concentration is too high for the wet average fiber diameter to be measured, automatic adjustment is performed, and the value which remains constant even when the concentration is changed is regarded as the wet average fiber diameter.

[Wet Fiber Diameter Coefficient of Variation]

The wet fiber diameter standard deviation is calculated from the results of measurement with the Valmet FS5, and the wet fiber diameter coefficient of variation is calculated using the following formula:

Wet fiber diameter coefficient of variation = (wet fiber diameter standard deviation)/(wet average fiber diameter)

[Wet Average Fiber Length]

The length-weighted average fiber length Lc (1) (unit: mm) is calculated from the results of measurement with the Valmet FS5, and the wet average fiber length is calculated using the following formula:

$$\text{Wet average fiber length } (\mu m) = \text{Lc (l)} \times 1000$$

When the wet average fiber length cannot be measured by optical automatic analysis within the range of the solid content concentration of cellulose fibers in pure water of 0.005 to 0.0005% by weight, the solid content concentration is increased by 0.005% by weight from 0.005% by weight, and the wet average fiber length is measured while changing the concentration to 0.010% by weight, 0.015% by weight, 0.020% by weight, and 0.025% by weight. When the concentration is too high for the wet average fiber length to be measured, automatic adjustment is performed, and the value which remains constant even when the concentration is changed is regarded as the wet average fiber length.

[Wet Fiber Length Coefficient of Variation]

The standard deviation of the length-weighted average fiber length is calculated from the results of measurement with the Valmet FS5, and the wet fiber length coefficient of variation is calculated using the following formula:

Wet fiber length coefficient of variation = {(wet fiber length standard deviation)/(wet average  fiber length)}

[Ratio of Coarse Structures (%)]

From the results of measurement with the Valmet FS5, the ratio of coarse structures is calculated using fiber count as the number of fibers to be measured (unit: fibers) and the following formula:

Ratio of coarse structures (%) = {(number of fibers having wet fiber diameter of 20 $\mu$m or more)/(fiber count)} $\times$ 100

The number of fibers to be measured is 1000 fibers or more.

[Fiber Diameter Agglomeration Constant]

The fiber diameter agglomeration constant is calculated using the following formula:

Fiber diameter agglomeration constant = (wet average fiber diameter)/(average fiber diameter)

[Degree of Crystallinity]

The dried cellulose fibers obtained in the measurement of the average fiber diameter are subjected to measurement using an X-ray diffraction device (RINT2200 manufactured by Rigaku Corporation). From the obtained intensity curve, the degree of crystallinity (%) is calculated using the following formula proposed by Seagal, et al.:

Degree of crystallinity (%) = {(diffraction intensity of (200) plane) - (diffraction intensity of amorphous part)}/(diffraction intensity of (200) plane) $\times$ 100

[Preparation of Porous Material]

An aqueous suspension having a cellulose fiber concentration of 0.10% by weight in pure water is prepared, a cellulose filter paper is placed on a Buchner funnel, and the suspension is filtered while reducing the pressure at a pressure of 0.01 MPa so as to achieve a cellulose amount of 40 g/m$^2$ to remove water. The obtained sheet in which cellulose fibers and filter paper are laminated is dried at 110°C for 1 hour, and after drying, the cellulose fibers layer is peeled off from the filter paper to obtain a cellulose fiber sheet.

[Sheet Appearance Evaluation]

A part of the obtained cellulose fiber sheet is cut out and osmium is then vapor-deposited thereon to prepare an observation sample. This observation sample is then observed under an electron microscope at a magnification of 200-fold.
The three locations are magnified using an electron microscope and evaluated to confirm whether the porous structure of the surface has been crushed using the following criteria.

"Poor": Pores are crushed in substantially all locations
"Good": Pores are crushed in some locations
"Excellent": Pores are maintained in almost all locations

Furthermore, the surface is evaluated for the presence of coarse structures of 10 $\mu$m or more in a dry state in accordance with the following criteria.

"Poor": There are coarse structures on all three sheets
"Good": One or two of the three sheets have coarse structures
"Excellent": No coarse structures are present on any of the three sheets

[Measurement of Airflow Resistance]

The airflow resistance (unit: sec/100 cc) per 10 $\mu$m of film thickness of the obtained cellulose fiber sheet is measured in accordance with JIS-P8117. Note that sheets which did not allow air to pass therethrough are indicated as "not measurable."

[Preparation of Cellulose Fiber-Rubber Complex]

An aqueous suspension having a cellulose fiber concentration of 5.0% by weight in pure water is prepared, added to natural rubber latex having a solid content concentration of 60.0% by weight so that the weight ratio of natural rubber: cellulose fibers is 20: 1. The resulting mixture liquid is stirred with a planetary stirrer, and the resulting wet master batch is thinly spread on a Teflon™ vat and dried at 50°C for 48 hours, and further dried in a vacuum dryer for 3 hours to obtain a masterbatch.

The obtained masterbatch is pre-kneaded for 5 minutes at 50°C and 20 rpm using a Labo Plastomill, and then 0.5 g of stearic acid, 6.0 g of zinc oxide, 3.5 g of sulfur, and 0.7 g of a vulcanization accelerator per 100 g of masterbatch are added, and kneading is further preformed for 10 minutes at 50°C and 40 rpm to obtain a lump composite. The obtained composite is hot-pressed for 8 minutes at 150°C and 30 MPa using a hot hydraulic press, and further cold-pressed for 5 minutes at 20°C and 10 MPa to obtain a cellulose fiber-rubber composite in a sheet shape having a thickness of approximately 2 mm.

[Tensile Test]

The obtained cellulose fiber-rubber composite is punched into a dumbbell shape. The stress at 100% strain (unit: MPa), tensile strength (unit: MPa), and elongation at fracture (unit: %) thereof are measured in accordance JIS-K6215. As a blank for comparison, a rubber composition not containing cellulose fibers is prepared. The stress at 100% strain, tensile strength, and elongation at fracture thereof are set to 1.00 for comparison. All tests are performed five times, and the average values are used as the test results.

[Evaluation of Coarse Structures on Fracture Surfaces]

The fracture surface after the tensile test is sampled and osmium is vapor-deposited thereon to prepare an observation sample. This sample is observed with an SEM-EDX at 500-fold magnification, and carbon and oxygen atom mapping is performed. The fracture surface is evaluated for the presence of coarse structures of 10 $\mu$m or more in a dry state using the following evaluation criteria.

"Poor": All five sheets have coarse structures
"Good": One to four out of five sheets have coarse structures
"Excellent": All five sheets are free of coarse structures.

[Marine Biodegradability Evaluation]

The obtained cellulose fibers are placed in seawater with reference to ASTM D6691, and the amount of oxygen consumed during cellulose degradation is measured for 28 days to evaluate the degradation rate. Simultaneously, the degradation rate of a reference substance, microcrystalline cellulose, is evaluated in parallel, and if the fibers shows a degradation of 90% or more after 28 days as compared to the reference substance, the cellulose fibers are judged to have a sufficiently fast marine biodegradability. The evaluation of both the cellulose fibers and the reference substance is performed with n = 2, and the average value is used as the result.

[Preparation of Cellulose Fibers]

[Example 1]

Cotton linter pulp was dissolved in a cuprammonium solution to prepare a cuprammonium cellulose solution having a cellulose concentration of 5.0% by weight, a copper concentration of 1.8% by weight, and an ammonia concentration of 5.5% by weight. The solution was filtered through a sintered filter having an average pore size of 5 $\mu$m to remove foreign substances.

The cuprammonium cellulose solution was discharged into hot water at 20°C from a spinneret having 180 discharge holes having a hole diameter of 0.3 mm at a distance between holes of 1.1 mm as a spinning nozzle, and by flow-induced tension spinning method, drawing and ammonia removal were performed to produce blue filaments. The blue filaments and hot water were received in a semicircular inclined trough, installed 20 cm below the funnel outlet, where 50°C hot water flowed, and the blue filaments and hot water were separated by pouring them on a plastic net. The blue filaments were sprayed with 10% by weight sulfuric acid for thorough copper removal, and then sprayed with pure water to thoroughly wash off the sulfuric acid to obtain continuous cellulose fibers in a wet state.

The obtained continuous cellulose fibers were diluted with pure water to prepare an aqueous suspension having a cellulose concentration of 1.0% by weight, and 500 ml of the suspension was placed in a mixer (Extreme Mill, MX-1200XT, manufactured by AS ONE Corporation) and treated for 5 minutes to prepare shortened cellulose fibers.

[Example 2]

Shortened cellulose fibers were prepared in the same manner as in Example 1, except that the cuprammonium cellulose solution had an ammonia concentration of 8.0% by weight.

[Example 3]

Shortened cellulose fibers were prepared in the same manner as in Example 2, except that the cuprammonium cellulose solution had a cellulose concentration of 4.0% by weight and a copper concentration of 1.4% by weight.

[Example 4]

Shortened cellulose fibers were prepared in the same manner as in Example 1, except that the cuprammonium cellulose solution had an ammonia concentration of 4.5% by weight.

[Example 5]

Shortened cellulose fibers were prepared in the same manner as in Example 4, except that the cuprammonium cellulose solution had a cellulose concentration of 7.0% by weight and a copper concentration of 2.5% by weight.

[Example 6]

The shortened fiber cellulose fibers obtained in Example 1 were subjected to micronization treatment five times using a high-pressure homogenizer (NS015H manufactured by Niro Soavi) under an operating pressure of 100 MPa to prepare shortened cellulose fibers.

[Example 7]

The shortened fiber cellulose fibers obtained in Example 1 were suspended in 10% by weight sulfuric acid to a cellulose concentration of 0.1% by weight, heated to 70°C, stirred with a magnetic stirrer for 30 minutes, and sulfuric acid was washed off with pure water to obtain cellulose fibers that had been subjected to a fibrillation enhancement treatment. The obtained cellulose fibers were treated with a high-pressure homogenizer in the same manner as in Example 7 to prepare shortened cellulose fibers.

[Example 8]

Continuous cellulose fibers were prepared in the same manner as in Example 1 by stirring a cuprammonium cellulose solution having a cellulose concentration of 7.0% by weight and a copper concentration of 2.5% by weight overnight under an oxygen atmosphere to reduce the degree of polymerization of the cellulose, and micronization treatment was then performed with a high-pressure homogenizer in the same manner as in Example 6 to prepare shortened cellulose fibers.

[Example 9]

A spinneret having 800 discharge holes having a hole diameter of 0.3 mm and a distance between holes of 1.1 mm was used as a spinning nozzle, and blue filaments coming out of the funnel outlet were redirected, hot water at 50°C was applied thereto, the tension of the blue filaments was reduced by adjusting the speed with a nip roller, copper was removed by dropping 10% by weight of sulfuric acid onto the blue filaments running freely in the horizontal direction with a nozzle, the filaments were then immersed in a bath in which pure water flowed countercurrently to wash off the sulfuric acid, whereby cellulose fibers wound around a hank were obtained. The obtained hank-wound cellulose fibers were cut using a rotary cutter having many cutting blades arranged radially at 1 mm pitch to prepare shortened cellulose fibers.
When the blue filaments that were redirected and running freely in the horizontal direction were touched with a fingertip, the surfaces of the filaments were smooth, suggesting that the single filaments were not firmly bonded to each other.

[Example 10]

The shortened cellulose fibers obtained in Example 9 were treated with a high-pressure homogenizer in the same manner as in Example 6 to prepare shortened cellulose fibers.

[Example 11]

The shortened fiber cellulose fibers obtained in Example 2 were subjected to micronization treatment five times using a high-pressure homogenizer (NS015H manufactured by Niro Soavi) under an operating pressure of 50 MPa to prepare shortened cellulose fibers.

[Comparative Example 1]

With reference to Patent Literature 6, a cellulose cuprammonium solution having a cellulose concentration of 8.0% by weight, a copper concentration of 2.9% by weight, and an ammonia concentration of 7.0% by weight was prepared, flow-induced tension spinning was performed using a spinneret having 2430 discharge holes having a hole diameter of 0.6 mm and a distance between holes of 1.4 mm to form blue filaments. The blue filaments coming out of the funnel outlet were redirected and regenerated with sulfuric acid using a laminar scouring bath in the same direction as the filaments. Thereafter, the sulfuric acid was washed off on a net in the same manner as in Example 1, and the fibers were shortened in a mixer to prepare shortened cellulose fibers.
When the blue filaments that were redirected and running freely in the horizontal direction were touched with a fingertip, they felt rough, unlike Example 9, suggesting that the single filaments were firmly bonded to each other.

[Comparative Example 2]

The cellulose fibers obtained in Comparative Example 1 were treated with a high-pressure homogenizer in the same manner as in Example 6 to prepare shortened cellulose fibers.

[Comparative Example 3]

Shortened cellulose fibers were prepared in the same manner as Comparative Example 1, except that the cuprammonium cellulose solution had a cellulose concentration of 10.0% by weight and a copper concentration of 3.6% by weight.

[Comparative Example 4]

With reference to Patent Literature 7, a cellulose cuprammonium solution having a cellulose concentration of 3.5% by weight, a copper concentration of 1.3% by weight, an ammonia concentration of 18.0% by weight, a PEG 500,000 concentration of 0.5% by weight, and a polyoxyethylene lauryl ether concentration of 0.1% by weight was prepared, and the solution was filtered through a sintered filter with an average pore size of 5 $\mu$m to remove foreign substances. Electrostatic spinning was carried out using a metal nozzle having an inner diameter of 0.41 mm, copper removal was performed with sulfuric acid, cellulose fibers were separated from the collector, and the sulfuric acid, PEG, and surfactant were washed off with pure water. The fibers were then shortened in a mixer in the same manner as in Example 1 to prepare shortened cellulose fibers.

[Comparative Example 5]

Conventional cellulose nanofibers (biomass nanofiber "BiNFi-s" WFo-100, manufactured by Sugino Machine Limited Co., Ltd.) were used.

[Comparative Example 6]

An alkali treatment using a caustic soda aqueous solution having a pH of 13 was applied to cotton linter pulp used as a cellulose raw material before the cellulose raw material was micronized, and thereafter micronization treatment was performed five times using a high-pressure homogenizer (NS015H manufactured by Niro Soavi) under an operating pressure of 100 MPa. Shortened cellulose fibers were thus produced.

[Comparative Example 7]

Shortened cellulose fibers were prepared in the same manner as in Comparative Example 6, except that the operating pressure of the high-pressure homogenizer was set to 50 MPa.

[Comparative Example 8]

Cellulose fibers were prepared by shortening the filaments in the same manner as in Example 1, except that with reference to Patent Literature 8, a cuprammonium cellulose solution was discharged into warm water at 20°C from a spinneret having 2430 discharge holes having a hole diameter of 0.07 mm and a distance between holes of 0.67 mm (corresponding to a hole density of 180.9 holes/cm$^2$), and by flow-induced tension spinning method, drawing and ammonia removal were performed to produce blue filaments, and the blue filaments and the spinning solution were received on a plastic net. When the state inside the funnel was observed, it was suggested that the filaments came into contact with each other due to the filament oscillation, resulting in the fibers being united.

[Evaluation of Cellulose Fibers]

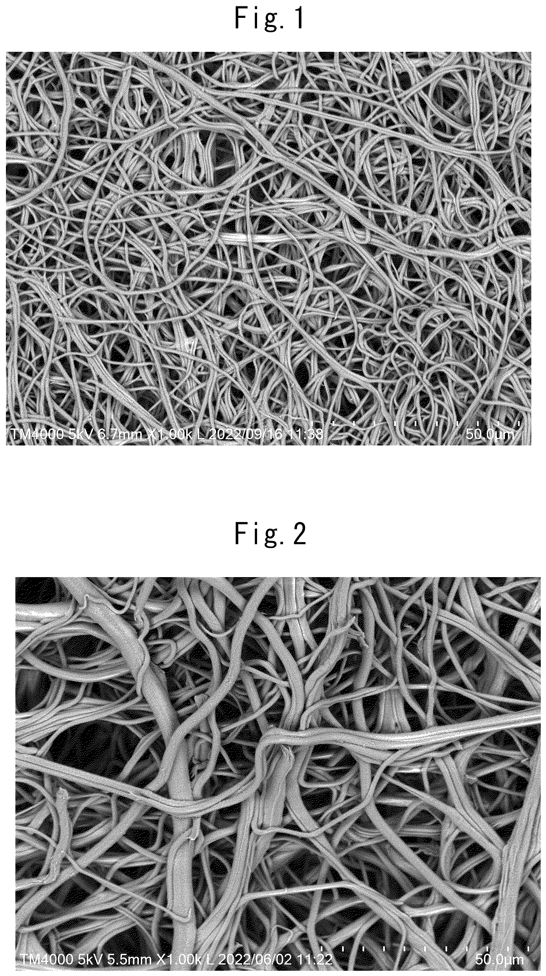

SEM observation and optical automatic analysis were performed on the cellulose fibers of Examples 1 to 11 and Comparative Examples 1 to 8. Regarding the fibers of Comparative Example 5, the ratio of fibers having a fiber diameter measured in a dry state of 0.1 μm or less was 99%, and the ratio of coarse structures having a wet fiber diameter measured in a wet state of 20 μm or more was 1.4%. The total of the ratios exceeded 100% because coarse structures may not be included in the measurement field of view of the measurement when a very small portion is magnified with an electron microscope. Furthermore, fibers which appear independent in the magnified image when a very small portion is magnified may actually be connected to each other in areas not visible in the image. The average fiber diameter of the fibers of Comparative Example 5 was less than 0.3 μm, and therefore the results of the optical automatic analysis of those fibers were each marked with an * in the upper right corner as reference values. X-ray diffraction measurement was performed in Example 1, Example 6, Comparative Example 1, and Comparative Examples 4 to 7. SEM images of Example 1, Comparative Example 1, Comparative Example 4, Comparative Example 7, and Comparative Example 8 are shown in FIGS. 1, 2, 8, 3, and 9, respectively. The evaluation results are summarized in Table 1 below.

[Table 1]

| | | Ex 1 | Ex 2 | Ex 3 | Ex 4 | Ex 5 | Ex 6 | Ex 7 | Ex 8 | Ex 9 | Ex 10 | Ex 11 | Comp Ex 1 | Comp Ex 2 | Comp Ex 3 | Comp Ex 4 | Comp Ex 5 | Comp Ex 6 | Comp Ex 7 | Comp Ex 8 |
|---|---|---|---|---|---|---|---|---|---|---|---|---|---|---|---|---|---|---|---|---|
| Avg fiber diameter | (um) | 1.0 | 0.5 | 0.3 | 2.0 | 2.9 | 0.9 | 0.8 | 0.8 | 1.0 | 1.1 | 0.5 | 2.9 | 2.1 | 4.5 | 0.4 | 0.1 | 0.3 | 1.3 | 0.6 |
| Ratio of fibers having a diameter of less than 0.1 um | (%) | 0 | 0 | 0 | 0 | 0 | 0 | 4 | 0 | 0 | 0 | 0 | 0 | 11 | 0 | 0 | 99 | 72 | 7 | 0 |
| Ratio of coarse structures | (%) | 0.2 | 0 | 0 | 0.4 | 0.8 | 0 | 0 | 0 | 0 | 0 | 0 | 8.0 | 1.5 | 0.9 | 4.3 | 1.4 | 2.3 | 5.5 | 7.2 |
| Fiber diameter coefficient of variation | (-) | 0.15 | 0.15 | 0.18 | 0.12 | 0.09 | 0.12 | 0.28 | 0.21 | 0.13 | 0.23 | 0.14 | 0.21 | 0.89 | 0.08 | 0.12 | 0.41 | 1.09 | 0.59 | 0.31 |
| Wet avg fiber diameter | (um) | 2.3 | 1.5 | 1.1 | 3.9 | 5.6 | 2.2 | 1.5 | 1.7 | 2.4 | 2.5 | 1.4 | 5.1 | 6.3 | 6.1 | 1.4 | 3.1* | 3.2 | 5.7 | 2.5 |
| Fiber diameter agglomeration constant | (-) | 2.2 | 2.9 | 3.4 | 2.0 | 1.9 | 2.4 | 1.9 | 2.1 | 2.4 | 2.3 | 2.8 | 1.8 | 3.0 | 1.4 | 3.5 | 44.3* | 10.6 | 4.4 | 4.2 |
| Crystalline structure | (-) | Type II | - | - | - | - | Type II | - | - | - | - | - | Type II | - | - | Type II | Type I | Type I | Type I | Type II |
| Degree of crystallinity | (%) | 65 | - | - | - | - | 63 | - | - | - | - | - | 62 | - | - | 29 | 73 | 71 | 79 | 67 |
| Wet fiber diameter coefficient of variation | (-) | 0.51 | 0.61 | 0.68 | 0.50 | 0.31 | 0.41 | 0.78 | 0.81 | 0.59 | 0.49 | 0.45 | 0.81 | 1.11 | 0.29 | 0.51 | 125* | 1.21 | 1.15 | 0.99 |
| Wet avg fiber length | (um) | 235 | 173 | 121 | 279 | 300 | 53 | 31 | 15 | 1046 | 210 | 51 | 311 | 156 | 501 | 99 | 38* | 50 | 68 | 361 |
| Wet fiber length coefficient of variation | (-) | 0.75 | 0.64 | 0.61 | 0.81 | 0.84 | 0.48 | 0.72 | 0.41 | 0.15 | 0.49 | 0.45 | 0.95 | 0.98 | 0.71 | 0.82 | 0.72* | 0.80 | 1.05 | 1.02 |

As can be understood from FIGS. 1 to 3, 8, and 9 and Table 1, the cellulose fibers obtained in Examples 1 to 10 were microfibers in terms of average fiber diameter. However, the fibers had a low ratio of nanofibers and thus were highly stable fibers having a low fiber diameter agglomeration constant. Furthermore, the fibers were uniform fibers having a low ratio of coarse structures and a low fiber diameter coefficient of variation. As in Examples 1 to 5, the fiber diameter can be freely controlled by adjusting the spinning conditions. As in Examples 6 to 10, the fiber length can be freely controlled while maintaining the fiber diameter by adjusting the micronization conditions.

Conversely, the fibers of Comparative Examples 1, 4, and 8 obtained by existing spinning methods, even though a wet spinning method was adopted in the same manner, had a certain amount of coarse structures. Regarding the cellulose fibers of Comparative Example 1, the cellulose fibers were firmly bonded to each other immediately after spinning. As in Comparative Example 2, even after disintegration treatment, a certain amount of coarse structures remained, and nanofibers were generated by fibrillation. The cellulose fibers of Comparative Example 8, as in Comparative Example 1, were also firmly bonded to each other immediately after spinning. Regarding the cellulose fibers of Comparative Example 4, it was not possible to determine whether the fibers were firmly bonded to each other as far as the fibers were observed with SEM, and only a very small amount of particulate parts having a diameter of 3 $\mu$m or more were seen within the field of view. However, when the fibers were subjected to evaluation by optical automatic analysis, a certain amount of coarse structures were present. As in Comparative Examples 5 to 7, fibers in which natural cellulose had been micronized by physical or chemical treatment had a certain amount of nanofiber parts and coarse structures.

[Performance Evaluation as Filter Base Material]

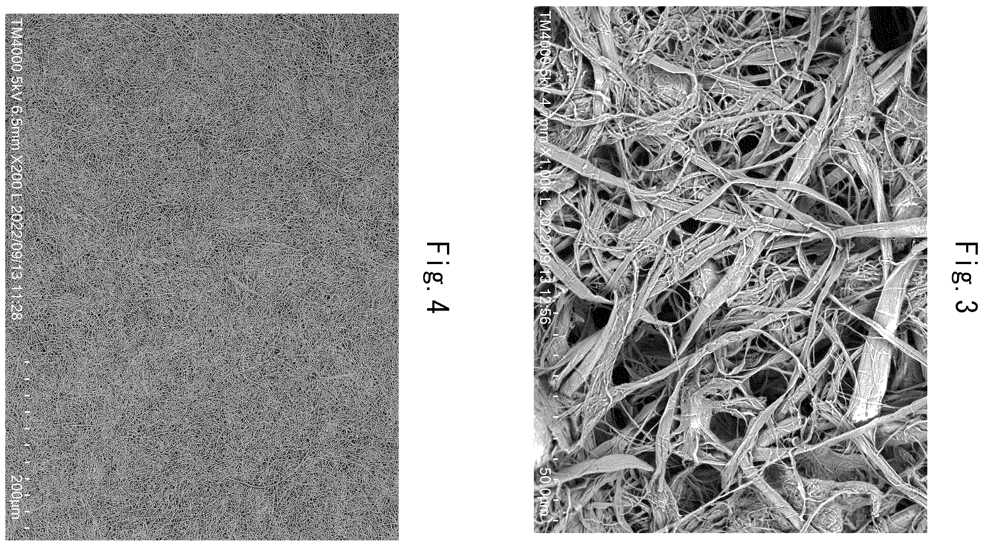

Using the cellulose fibers obtained in Examples 1 to 6 and Comparative Examples 4 to 7, cellulose fiber sheets each having a basis weight of 40 g/m$^2$ were prepared and evaluated as filter base materials. SEM images of the cellulose fiber sheets obtained in Example 1, Comparative Example 4, and Comparative Example 7 are shown in FIGS. 4, 10, and 5, respectively. The evaluation results are summarized in the drawings below.

[Table 2]

| | | Ex 1 | Ex 2 | Ex 3 | Ex 4 | Ex 5 | Ex 6 | Comp Ex 4 | Comp Ex 5 | Comp Ex 6 | Comp Ex 7 |
|---|---|---|---|---|---|---|---|---|---|---|---|
| Air resistance | (s/100cc) | 2,013 | 3,612 | 5,623 | 1,102 | 261 | 11,679 | 4998 | Not measurable | Note measurable | 9,872 |
| Presence or absence of surface densification | (Visual evaluation) | Exc | Exc | Good | Exc | Exc | Good | Exc | Poor | Poor | Good |
| Presence or absence of coarse structures on the surface | (Visual evaluation) | Exc | Exc | Exc | Exc | Exc | Exc | Poor | Poor | Poor | Poor |

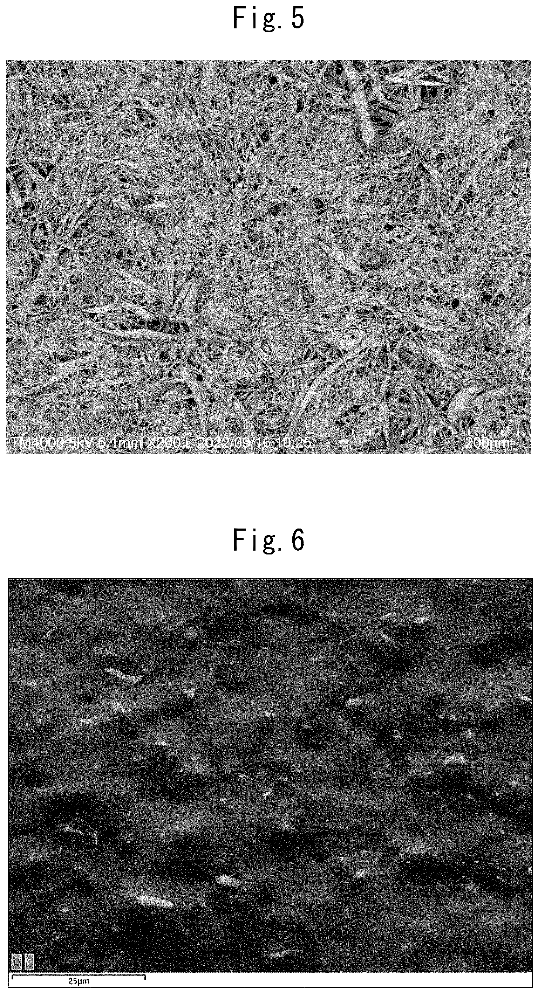

As can be understood from FIGS. 4 and 5, regarding the cellulose fibers of Example 1, the gaps between the fibers were maintained even after drying by heating, and a sheet of uniform porous material was obtained. Conversely, the cellulose fibers of Comparative Example 7 contained nanofibers and had a short fiber length, and the gaps between the fibers were filled by shrinkage during drying. Thus, the obtained sheet did not have a uniform porous structure.

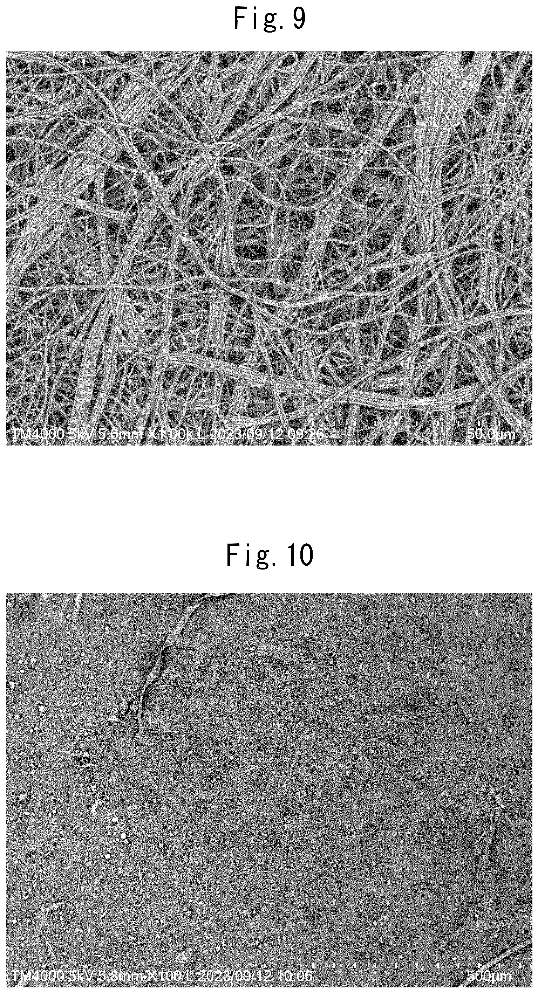

As can be understood from Table 2, regarding the sheets prepared from the cellulose fibers having a high ratio of nanofibers obtained in Comparative Examples 5 and 6, the gaps between the fibers were filled to such an extent that their air resistance could not be measured, and the sheets were not considered to have a porous structure. Regarding the cellulose fibers of Comparative Examples 5 and 6, which had a short fiber length, the fibers were disentangled during drying, and the gaps between the fibers easily became filled. As can be understood from FIG. 10, the sheets prepared from the cellulose fibers of Comparative Examples 4 and 7, which had a high ratio of coarse structures, contained coarse structures, and defects such as pinholes and reduced strength easily occurred.

[Performance Evaluation 1 as Filler in Rubber Composition]

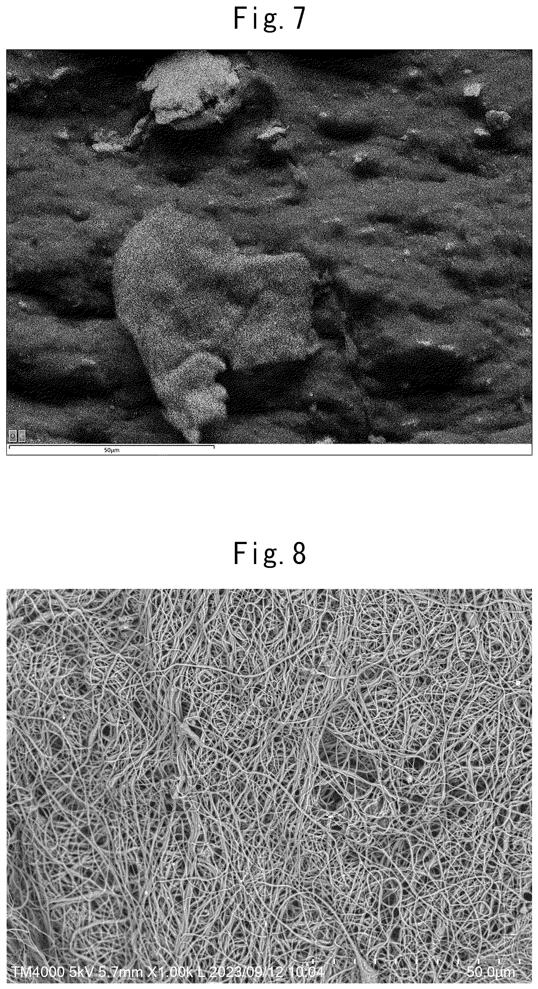

Using the cellulose fibers obtained in Examples 1 to 8 and 11, and Comparative Examples 4 to 7, cellulose fiber-rubber composites were prepared and evaluated as fillers. SEM-EDX images of the fracture surfaces of Example 1 and Comparative Example 6 are shown in FIGS. 6 and 7, respectively. The evaluation results are summarized in Table 3 below.

[Table 3]

| | | Blank | Ex 1 | Ex 2 | Ex 3 | Ex 4 | Ex 5 | Ex 6 | Ex 7 | Ex 8 | Ex 11 | Comp Ex 4 | Comp Ex 5 | Comp Ex 6 | Comp Ex 7 |
|---|---|---|---|---|---|---|---|---|---|---|---|---|---|---|---|
| Amount of cellulose fibers relative to rubber | (wt%) | 0 | 5 | 5 | 5 | 5 | 5 | 5 | 5 | 5 | 5 | 5 | 5 | 5 | 5 |
| Stress at 100% strain (compared to blank) | (-) | 1.00 | 3.35 | 3.82 | 4.11 | 3.29 | 2.81 | 4.04 | 3.55 | 2.69 | 5.09 | 2.99 | 3.76 | 8.03 | 3.12 |
| Tensile strength (compared to blank) | (-) | 1.00 | 1.17 | 1.21 | 1.14 | 1.15 | 1.16 | 1.19 | 1.20 | 1.10 | 1.23 | 0.77 | 0.91 | 0.90 | 0.85 |
| Elongation at fracture (compared to blank) | (-) | 1.00 | 0.99 | 1.01 | 0.99 | 0.95 | 0.94 | 1.00 | 1.01 | 1.00 | 0.98 | 0.84 | 0.92 | 0.85 | 0.87 |
| Presence or absence of coarse structures on fracture surface | (visual evaluation) | Exc | Good | Good | Exc | Good | Good | Exc | Exc | Exc | Exc | Poor | Good | Good | Poor |

As is clear from FIGS. 6 and 7, the fracture surface of the cellulose fiber-rubber composite obtained from the cellulose fibers of Example 1 showed suitable cellulose fiber dispersion, whereas the fracture surface of the composite obtained from the cellulose fibers of Comparative Example 6, in which coarse structures were presented, showed scattered cellulose lumps.

Furthermore, as is clear from Table 3, the cellulose fiber-rubber composites obtained from the cellulose fibers of Examples 1 to 8 and 11 had improved tensile strength without a decrease in elongation at fracture, and had a certain fiber length. Thus, they could improve stress at 100% strain like a compounding agent containing type I cellulose. Conversely, the composites obtained from the cellulose fibers containing coarse structures of Comparative Examples 4 to 7 tended to have a decrease in elongation at fracture and a decrease in tensile strength.

[Performance Evaluation 2 as Filler in Rubber Composition]

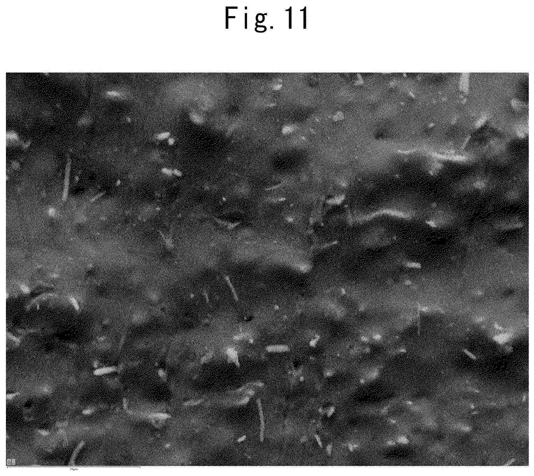

Using the cellulose fibers obtained in Example 1, a cellulose fiber-rubber composite was prepared by changing the amount of the cellulose fibers relative to rubber to 3% by weight or 10% by weight, and evaluations as fillers were performed. An SEM-EDX image of the fracture surface of Example 1-3 is shown in FIG. 11. The evaluation results are summarized in Table 4 below.

[Table 4]

| | | Blank | Ex 1-2 | Ex 1-3 |
|---|---|---|---|---|
| Amount of cellulose fibers relative to rubber | (wt%) | 0 | 3 | 10 |
| Stress at 100% strain (compared to blank) | (-) | 1.00 | 2.94 | 6.62 |
| Tensile strength (compared to blank) | (-) | 1.00 | 1.10 | 1.01 |
| Elongation at fracture (compared to blank) | (-) | 1.00 | 1.04 | 0.92 |
| Presence or absence of coarse structures on fracture surface | (visual evaluation) | Exc | Exc | Good |

As is clear from FIG. 11, even if the blending amount of the cellulose fibers of Example 1 was increased, suitable dispersion of the cellulose fibers was maintained. Furthermore, as is clear from Table 4, even if the cellulose fibers were blended at 10% by weight, tensile strength was maintained and stress at 100% strain was improved in accordance with the blending amount.

[Marine Biodegradability Evaluation]

The marine biodegradability of the cellulose fibers obtained in Example 1 was evaluated. The degradation rate after 28 days was 93% as compared to the reference substance, confirming that biodegradation in the ocean was sufficiently fast.

INDUSTRIAL APPLICABILITY

The cellulose fibers according to the present invention are uniform cellulose microfibers (fibrous cellulose aggregates) having few coarse structures without the addition of chemical substances or modification of cellulose, and thus, can be used for various general purposes such as fillers for reinforcing resins and rubbers, and base materials for porous materials such as filters, etc. The cellulose fibers according to the present invention can also be suitably used as a raw material for porous materials such as adsorbents, sound absorbing materials, and heat insulating materials, base materials for transparent materials and optical materials of electronic products and others, additives for foods, paints, and cosmetics, base materials for packaging materials and gas barrier materials, viscosity adjusters and dispersion stabilizers for liquid products, substrates for artificial leather, and apparel applications in which synthetic fibers and cellulose fibers are used.

**Claims**

1. Cellulose fibers, having an average fiber diameter in a dry state observed by an electron microscope of 0.3 μm or more and 3.0 μm or less, wherein a ratio of fibers having a fiber diameter of less than 0.1 μm is 5% or less, and a ratio of coarse structures, indicated by a ratio of the number of fibers having a wet fiber diameter of 20 μm or more measured by optical automatic analysis, is 3.0% or less.

2. The cellulose fibers according to claim 1, having a wet average fiber diameter of 1.0 $\mu$m or more and less than 10.0 $\mu$m.

3. The cellulose fibers according to claim 1 or 2, having a wet average fiber length of 3000 $\mu$m or less.

4. The cellulose fibers according to claim 1 or 2, wherein a fiber diameter coefficient of variation is 1.00 or less.

5. The cellulose fibers according to claim 1 or 2, wherein a fiber diameter agglomeration constant is 5.0 or less.

6. The cellulose fibers according to claim 1 or 2, wherein a crystal structure of cellulose constituting the cellulose fibers is type II.

7. The cellulose fibers according to claim 1 or 2, wherein a degree of crystallinity of cellulose constituting the cellulose fibers is 30% or more and 90% or less.

8. A composition comprising the cellulose fibers according to claim 1 or 2.

9. A porous material comprising the cellulose fibers according to claim 1 or 2.

# Fig. 1

# Fig. 2

# Fig. 3

# Fig. 4

# Fig. 5

# Fig. 6

## Fig. 7

## Fig. 8

Fig. 9

Fig. 10

Fig. 11

## INTERNATIONAL SEARCH REPORT

| International application No. |
|---|
| **PCT/JP2023/036859** |

| A. | CLASSIFICATION OF SUBJECT MATTER |
|---|---|

*D01F 2/04*(2006.01)i
FI:  D01F2/04 Z

According to International Patent Classification (IPC) or to both national classification and IPC

| B. | FIELDS SEARCHED |
|---|---|

Minimum documentation searched (classification system followed by classification symbols)

D01F1/00-6/96; D01F9/00-9/04; D21B1/00-1/38; D21C1/00-11/14; D21D1/00-99/00; D21F1/00-13/12; D21G1/00-9/00; D21H11/00-27/42; D21J1/00-7/00; D01D1/00-13/02; C08B1/00-37/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-4151 A (UNIV OKAYAMA) 08 January 2015 (2015-01-08) claims 1, 10, 11, paragraphs [0013], [0029]-[0030], [0036], [0068], [0070], [0074], [0079], fig. 2-4 | 1-6, 8-9 |
| Y | claims 1, 10, 11, paragraphs [0013], [0029]-[0030], [0036], [0068], [0070], [0074], [0079], fig. 2-4 | 7 |
| Y | JP 2019-210333 A (DAIO SEISHI KK) 12 December 2019 (2019-12-12) paragraphs [0048]-[0049] | 7 |
| Y | JP 2021-066780 A (ASAHI KASEI CORP) 30 April 2021 (2021-04-30) paragraph [0024] | 7 |
| A | WO 2020/013045 A1 (DAIO SEISHI KK) 16 January 2020 (2020-01-16) | 1-9 |
| A | JP 61-034212 A (ASAHI KASEI CORP) 18 February 1986 (1986-02-18) | 1-9 |
| A | CN 102277642 A (SOUTHWEST UNIVERSITY OF SCIENCE AND TECHNOLOGY) 14 December 2011 (2011-12-14) | 1-9 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/036859**

| C. | DOCUMENTS CONSIDERED TO BE RELEVANT | |
|---|---|---|
| Category* | Citation of document, with indication, where appropriate, of the relevant passages | Relevant to claim No. |
| A | JP 2010-539301 A (LENZING AG) 16 December 2010 (2010-12-16) | 1-9 |
| A | KR 10-2008-0075627 A (PARK, Won-Ho) 19 August 2008 (2008-08-19) | 1-9 |
| A | JP 5584445 B2 (ASAHI KASEI FIBERS CORP) 03 September 2014 (2014-09-03) | 1-9 |
| A | JP 2020-122231 A (MITSUBISHI CHEM CORP) 13 August 2020 (2020-08-13) | 1-9 |

Form PCT/ISA/210 (second sheet) (January 2015)

INTERNATIONAL SEARCH REPORT
Information on patent family members

International application No.

**PCT/JP2023/036859**

| Patent document cited in search report | | | Publication date (day/month/year) | Patent family member(s) | | | Publication date (day/month/year) |
|---|---|---|---|---|---|---|---|
| JP | 2015-4151 | A | 08 January 2015 | (Family: none) | | | |
| JP | 2019-210333 | A | 12 December 2019 | (Family: none) | | | |
| JP | 2021-066780 | A | 30 April 2021 | (Family: none) | | | |
| WO | 2020/013045 | A1 | 16 January 2020 | US | 2021/0261758 | A1 | |
| | | | | CN | 112262175 | A | |
| | | | | KR | 10-2021-0030270 | A | |
| JP | 61-034212 | A | 18 February 1986 | (Family: none) | | | |
| CN | 102277642 | A | 14 December 2011 | (Family: none) | | | |
| JP | 2010-539301 | A | 16 December 2010 | US | 2011/0028608 | A1 | |
| | | | | EP | 2190917 | A1 | |
| | | | | KR | 10-2010-0069694 | A | |
| | | | | CN | 101821327 | A | |
| KR | 10-2008-0075627 | A | 19 August 2008 | (Family: none) | | | |
| JP | 5584445 | B2 | 03 September 2014 | (Family: none) | | | |
| JP | 2020-122231 | A | 13 August 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020055951 A
- JP 2020125417 A
- JP 6799565 B
- JP 6845510 B
- JP 2021014512 A
- JP 5584445 B
- JP 4871196 B
- JP 7101879 B